# EUROPÄISCHE PATENTSCHRIFT

(11) **EP 3 023 618 B1**
(45) Veröffentlichungstag und Bekanntmachung des Hinweises auf die Patenterteilung: **19.12.2018**
(21) Anmeldenummer: 15003057.5
(22) Anmeldetag: 26.10.2015
(51) Int. Cl.: F02D 41/06, F02D 41/00

(54) **VERFAHREN ZUM STARTEN EINER MIT EINEM BRENNSTOFF-LUFT-GEMISCH BETRIEBENEN BRENNKRAFTMASCHINE**
METHOD FOR STARTING A COMBUSTION ENGINE OPERATED WITH A FUEL AIR MIXTURE
PROCEDE DE DEMARRAGE D'UN MOTEUR A COMBUSTION INTERNE FONCTIONNANT AVEC LE MELANGE AIR/CARBURANT

(30) Priorität: 24.11.2014 AT 8462014
(43) Veröffentlichungstag der Anmeldung: 25.05.2016
(73) Patentinhaber: GE Jenbacher GmbH & Co OG, 6200 Jenbach (AT)
(72) Erfinder: Hirzinger-Unterrainer, Johann, 6345 Kössen (AT); Kopecek, Herbert, 6130 Schwaz (AT); Waldhart, Michael, 6410 Telfs (AT); Lu, Hang, 85356 Freising (DE); Perktold, Michael, 6633 Biberwier (AT)
(74) Vertreter: Torggler & Hofinger Patentanwälte

(56) Entgegenhaltungen:
- EP-A1- 2 481 906
- EP-A2- 1 818 526
- FR-A1- 2 817 589
- JP-A- H09 112 353

## Beschreibung

Die Erfindung betrifft ein Verfahren zum Starten einer mit einem Brennstoff-Luft-Gemisch betriebenen Brennkraftmaschine, insbesondere eines stationären Gasmotors, wobei der Brennkraftmaschine als Teil des Brennstoff-Luft-Gemischs ein Brennstoffvolumenstrom zugeführt wird, der unter Berücksichtigung wenigstens eines für den Energieinhalt des Brennstoff-Luft-Gemischs charakteristischen Parameters ermittelt wird, wobei die Brennkraftmaschine durch eine Startvorrichtung solange angetrieben wird bis die Brennkraftmaschine selbsttätig weiterläuft. Ein Verfahren zum Starten einer mit einem Brennstoff-Luft-Gemisch betriebenen Brennkraftmaschine ist zum Beispiel aus dem Dokument EP 1 818 526 A2 bekannt.

Bei einem Startvorgang einer mit einem Brennstoff-Luft-Gemisch betriebenen Brennkraftmaschine wird dieser ein Brennstoff-Luft-Gemisch, umfassend ein Brennstromvolumenstrom und Luft zugeführt und durch eine Startvorrichtung so lange angetrieben, bis die Brennkraftmaschine selbsttätig weiterläuft. Die Größe des Brennstoffvolumenstroms wird dabei häufig unter Berücksichtigung wenigstens eines für den Energieinhalt des Brennstoff-Luft-Gemischs charakteristischen Parameters ermittelt, wie beispielsweise dem stöchiometrischen Luftbedarf bzw. Mindestluftbedarf Iₘᵢₙ in Bezug auf den Brennstoff oder dem Verbrennungsluftverhältnis Lambda des Brennstoff-Luft-Gemischs. Da eine Brennkraftmaschine üblicherweise bei einem Lambda-Wert von 1,2 startet, wird dieser charakteristische Parameter häufig auf den Wert von 1,2 festgelegt. Der Mindestluftbedarf ist abhängig vom verwendeten Brennstoff und ist damit bei der Verwendung eines Brenngases als Brennstoff an die Gasqualität gekoppelt. Vorausgesetzt man weiß die Gasqualität, kann somit der geeignete Wert für den Mindestluftbedarf bei der Ermittlung des Brennstoffvolumenstroms berücksichtigt werden.

Wenn jedoch die Gasqualität bzw. wesentliche für den Energieinhalt des Brennstoff-Luft-Gemischs relevante charakteristische Parameter nicht bekannt sind, kann es vorkommen, dass die Brennkraftmaschine bei den gewählten Parameterwerten nicht startet oder in einem ungünstigen Betriebsmodus betrieben wird.

Aufgabe der Erfindung ist es daher, ein gegenüber dem Stand der Technik verbessertes Verfahren zum Starten einer mit einem Brennstoff-Luft-Gemisch betriebenen Brennkraftmaschine anzugeben. Insbesondere soll das vorgeschlagene Verfahren auch bei einem Brennstoff bzw. Brenngas unbekannter Qualität ein zuverlässiges Starten der Brennkraftmaschine ermöglichen.

Diese Aufgabe wird erfindungsgemäß durch die Merkmale des Anspruchs 1 gelöst. Vorteilhafte Ausgestaltungen der Erfindung sind in den abhängigen Ansprüchen angegeben.

Gemäß der Erfindung ist also vorgesehen, dass der der Brennkraftmaschine zugeführte Brennstoffvolumenstrom durch Veränderung des wenigstens einen für den Energieinhalt des Brennstoff-Luft-Gemischs charakteristischen Parameters solange verändert wird bis die Brennkraftmaschine selbsttätig weiterläuft.

Durch das Verändern des wenigstens einen für den Energieinhalt des Brennstoff-Luft-Gemischs charakteristischen Parameters (z. B. Mindestluftbedarf oder Verbrennungsluftverhältnis) wird erreicht, dass die Brennkraftmaschine zuverlässig startet, obwohl die Qualität des Brennstoffs und damit der Heizwert des Brennstoffs zunächst nicht bekannt ist.

Gemäß der Erfindung ist vorgesehen, dass ein Mindestluftbedarf in Bezug auf den Brennstoff als für den Energieinhalt des Brennstoff-Luft-Gemischs charakteristischer Parameter verändert wird.

Es kann auch vorgesehen sein, dass ein Verbrennungsluftverhältnis des Brennstoff-Luft-Gemischs als für den Energieinhalt des Brennstoff-Luft-Gemischs charakteristischer Parameter verändert wird.

In einer bevorzugten Ausführungsform der Erfindung kann vorgesehen sein, dass der wenigstens eine für den Energieinhalt des Brennstoff-Luft-Gemischs charakteristische Parameter ausgehend von einem vorgebbaren Startwert verändert wird. Sinnvollerweise kann das Verändern des Parameters in für die entsprechende Brennstoffkategorie relevanten, sinnvollen Grenzen stattfinden. Bei der Verwendung von Brenngas als Brennstoff sind beispielsweise sinnvolle Bereiche für das Verändern des Mindestluftbedarfs Iₘᵢₙ für Erdgas 9 bis 10, für Biogas 6 bis 10 und für Grubengas 3 bis 10. Bei Brenngas kann also für diese Beispiele insbesondere vorgesehen sein, dass ausgehend von einem Startwert von 10 für den Mindestluftbedarf dieser verringert wird, bis die Brennkraftmaschine selbsttätig weiterläuft.

Gemäß einer besonders bevorzugten Ausführungsform kann vorgesehen sein, dass der der Brennkraftmaschine zugeführte Brennstoffvolumenstrom gemäß folgender Formel ermittelt wird:Q_{B} = Q_{G} / (1 + Lambda * Iₘᵢₙ), wobei Q_{B} dem der Brennkraftmaschine zugeführten Brennstoffvolumenstrom, Q_{G} einem vorgebbaren Gemischvolumenstrom des Brennstoff-Luft-Gemischs, Lambda einem Verbrennungsluftverhältnis des Brennstoff-Luft-Gemischs und Iₘᵢₙ einem Mindestluftbedarf in Bezug auf den Brennstoff entsprechen.

Das Verbrennungsluftverhältnis Lambda des Brennstoff-Luft-Gemischs ist das Verhältnis der tatsächlich für eine Verbrennung zur Verfügung stehenden Luftmasse zur mindestens notwendigen stöchiometrischen Luftmasse, die für eine vollständige Verbrennung nötig ist. Bei mit Luftüberschuss und daher überstöchiometrisch betriebenen Brennkraftmaschinen (Lambda > 1) wird das Verbrennungsluftverhältnis häufig auch als Luftüberschusszahl bezeichnet. Der Mindestluftbedarf Iₘᵢₙ - der häufig auch als stöchiometrischer Luftbedarf bezeichnet wird - ist ein Massenverhältnis aus der stöchiometrischen Luftmasse zur Brennstoffmasse. Der Mindestluftbedarf Iₘᵢₙ ist daher ein vom jeweils eingesetzten Brennstoff abhängiger Wert. Er gibt das Vielfache der gegebenen Brennstoffmasse an, die als Luftmasse benötigt wird, um eine stöchiometrische Verbrennung (bei Lambda = 1) der Brennstoffmasse zu ermöglichen.

Beim Gemischvolumenstrom Q_{G} des Brennstoff-Luft-Gemischs kann es sich um den auf Normaldruck (1,013 bar) und Normaltemperatur (293 Kelvin) normalisierten Wert eines Gemischvolumenstroms des Brennstoff-Luft-Gemischs handeln, der sich aus dem Liefergrad und dem Ansaugvolumen pro Minute bei gegebener Drehzahl der Brennkraftmaschine ergibt.

Vorzugsweise kann vorgesehen sein, dass Iₘᵢₙ verändert wird.

Bei einer besonders bevorzugten Ausführungsvariante kann vorgesehen sein, dass Iₘᵢₙ verringert wird, vorzugsweise ausgehend von etwa 10 als Startwert.

Dieser Fall ist insbesondere dann relevant, wenn aufgrund der Umgebungsparameter zwar bekannt ist, bei welchem Wert für das Verbrennungsluftverhältnis Lambda die Brennkraftmaschine üblicherweise startet (z.B. bei Lambda = 1,2), die Brennstoffqualität und damit der passende Wert für den Mindestluftbedarf Iₘᵢₙ jedoch unbekannt ist. Dabei kann vorgesehen sein, dass für den Startvorgang der Brennkraftmaschine der Wert für das Verbrennungsluftverhältnis Lambda konstant gehalten wird - z.B. bei Lambda = 1,2 - und der Wert für den Mindestluftbedarf Iₘᵢₙ ausgehend vom Wert Iₘᵢₙ = 10 verringert wird, bis die Brennkraftmaschine startet und selbsttätig weiterläuft. Wenn durch das Verändern des Wertes für den Mindestluftbedarf Iₘᵢₙ festgestellt wird, dass die Brennkraftmaschine beispielsweise bei einem Wert von Iₘᵢₙ = 4 startet, so kann dadurch auf die mit diesem Wert verbundene Qualität des Brennstoffs rückgeschlossen werden. Insbesondere kann dadurch jedoch der Startvorgang zuverlässig durchgeführt werden, ohne dass im Vorfeld die Gasqualität bekannt sein muss. Dieser beim Start festgestellte Wert für den Mindestluftbedarf Iₘᵢₙ - im angeführten Beispiel Iₘᵢₙ = 4 - kann darüber hinaus für den weiteren Betrieb der Brennkraftmaschine als entsprechender Wert für den Mindestluftbedarf Iₘᵢₙ in die jeweiligen Berechnungsformeln für die Brennstoffdosierung eingesetzt werden und somit einen optimalen Betrieb der Brennkraftmaschine ermöglichen, der an die tatsächlich vorhandene Brennstoffqualität angepasst ist.

Zusätzlich kann auch vorgesehen sein, dass Lambda verändert wird.

Bei einer besonders bevorzugten Ausführungsvariante kann vorgesehen sein, dass Lambda verringert wird, vorzugsweise ausgehend von etwa 2 als Startwert.

Dieser Fall ist insbesondere dann relevant, wenn zwar die Brennstoffqualität und damit der passende Wert für den Mindestluftbedarf Iₘᵢₙ bekannt ist, jedoch aufgrund der Umgebungsparameter (z.B. Aufstellort der Brennkraftmaschine auf großer Höhe über dem Meeresspiegel) nicht bekannt ist, bei welchem Wert für das Verbrennungsluftverhältnis Lambda die Brennkraftmaschine bei gegebener Umgebung startet. Dabei kann vorgesehen sein, dass für den Startvorgang der Brennkraftmaschine der Wert für den Mindestluftbedarf Iₘᵢₙ entsprechend dem vorhandenen, bekannten Brennstoff konstant gehalten wird und der Wert für das Verbrennungsluftverhältnis Lambda ausgehend von einem vorgebbaren Startwert verringert wird, bis die Brennkraftmaschine startet und selbsttätig weiterläuft, beispielsweise bei einem Wert von Lambda = 1,1.

In einer bevorzugten Ausführungsform der Erfindung kann vorgesehen sein, dass jener Parameterwert des wenigstens einen für den Energieinhalt des Brennstoff-Luft-Gemischs charakteristischen Parameters, bei dem die Brennkraftmaschine selbsttätig weiterläuft, für den weiteren Betrieb der Brennkraftmaschine zumindest zeitweise im Wesentlichen konstant gehalten wird. Dabei kann auch vorgesehen sein, dass jener Parameterwert des charakteristischen Parameters, bei dem die Brennkraftmaschine selbsttätig weiterläuft, für alle weiteren Lastzustände der Brennkraftmaschine konstant gehalten wird.

Es kann auch vorgesehen sein, dass der Parameterwert bis zu einer Leistungsanforderung an die Brennkraftmaschine von höchstens 30% einer Nennlast der Brennkraftmaschine im Wesentlichen konstant gehalten wird.

Weitere Einzelheiten und Vorteile der vorliegenden Erfindung werden anhand der nachfolgenden Figurenbeschreibung erläutert. Dabei zeigt bzw. zeigen
- Fig. 1: eine Brennkraftmaschine in einem schematischen Blockdiagramm,
- Fig. 2: einen Startvorgang einer Brennkraftmaschine gemäß einem Ausführungsbeispiel des vorgeschlagenen Verfahrens und
- Fig. 3: einen Startvorgang einer Brennkraftmaschine gemäß einem weiteren Ausführungsbeispiel des vorgeschlagenen Verfahrens.

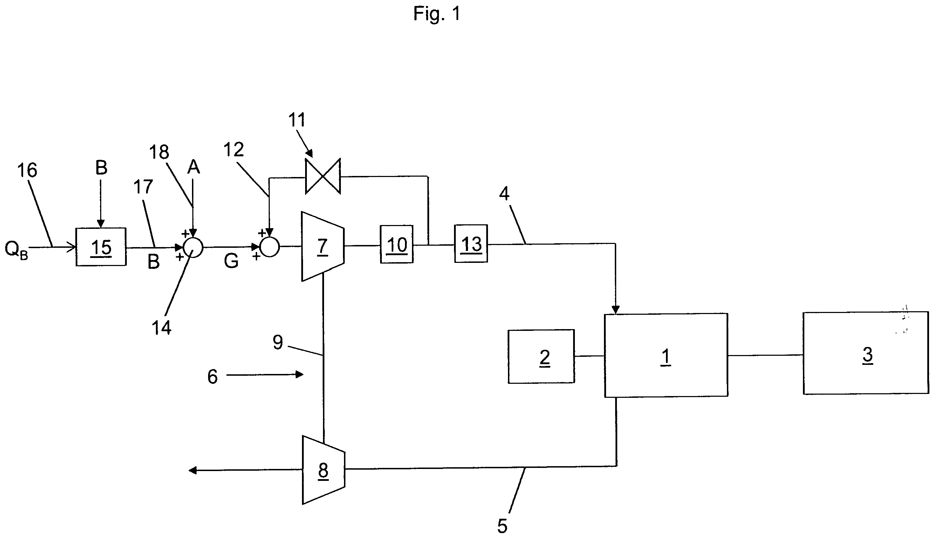

Fig. 1 zeigt eine Brennkraftmaschine 1 in Form eines stationären Gasmotors in einem schematischen Blockdiagramm. Während des Startvorgangs der Brennkraftmaschine 1 wird diese von einer Startvorrichtung 2 solange angetrieben, bis die Brennkraftmaschine 1 selbsttätig weiterläuft. Die Brennkraftmaschine 1 treibt in diesem Beispiel einen elektrischen Generator 3 an, der ein nicht dargestelltes elektrisches Energienetz mit elektrischem Strom versorgt. In einer Zufuhrleitung 4 und einer Abgasleitung 5 ist in bekannter Art und Weise ein Turbolader 6 angeordnet, der eine Abgasturbine 8 und einen über eine Welle 9 von der Abgasturbine 8 angetriebenen Verdichter 7 umfasst. Dem Verdichter 7 ist ein Gemischkühler 10 nachgeschaltet. Über eine Bypassleitung 12 und einem in der Bypassleitung 12 angeordneten Verdichterbypassventil 11 kann ein Teil des verdichteten Brennstoff-Luft-Gemischs G wieder vor den Verdichter 7 rückgeführt werden. Stromaufwärts des Verdichters 7 ist in der Zufuhrleitung 4 ein Mischer 14 angeordnet, in dem Luft A und Brennstoff B zu einem Brennstoff-Luft-Gemisch G gemischt werden, das dem Verdichter 7 zugeführt wird. Nach dem Durschströmen des Gemischkühlers 10 und einer Drosselklappe 13 wird das Brennstoff-Luft-Gemisch G der Brennkraftmaschine 1 zugeführt.

In den Mischer 14 münden eine Luftleitung 18 zum Einbringen von Luft A und eine Brennstoffleitung 17 zum Einbringen von Brennstoff B in Form von Brenngas ein. In der Brennstoffleitung 17 ist ein Brennstoffventil 15 z.B. in Form eines Gasmagnetventils angeordnet. Diesem Brennstoffventil 15 wird über eine Signalleitung 16 der jeweilige Wert für den geforderten Brennstoffvolumenstrom Q_{B} gemäß dem vorgeschlagenen Verfahren kommandiert. Abhängig vom kommandierten Wert für den geforderten Brennstoffvolumenstrom Q_{B} wird über das Brennstoffventil 15 der entsprechende Brennstoffvolumenstrom Q_{B} an Brennstoff B in der Brennstoffleitung 17 bereitgestellt.

Der kommandierte Wert für den Brennstoffvolumenstrom Q_{B} ändert sich während des Startvorgangs der Brennkraftmaschine 1 in Abhängigkeit der Veränderung des wenigstens einen für den Energieinhalt des Brennstoff-Luft-Gemischs G charakteristischen Parameters (z.B. Mindestluftbedarf Iₘᵢₙ oder Verbrennungsluftverhältnis Lambda) gemäß dem vorgeschlagenen Verfahren.

Anders als in Fig. 1 dargestellt, kann die Brennkraftmaschine 1 auch ohne Bypassleitung 12 ausgeführt sein. Alternativ oder zusätzlich zur Bypassleitung 12 kann in der Abgasleitung 5 im Bereich der Abgasturbine 8 in bekannter Art und Weise auch ein Wastegate angeordnet sein.

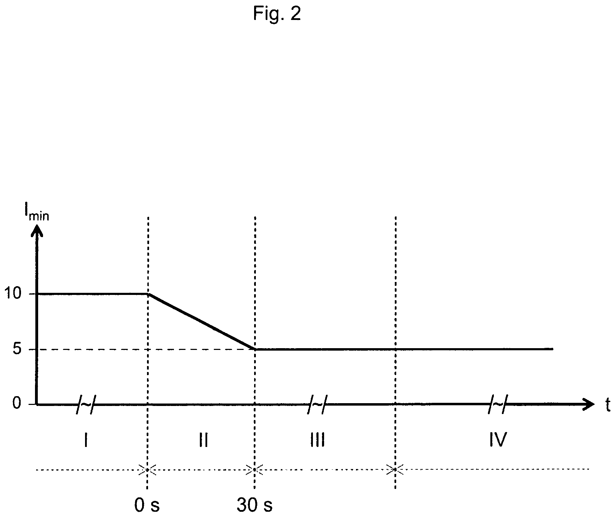

Fig. 2 zeigt für einen beispielhaften Startvorgang einer Brennkraftmaschine 1 den zeitlichen Verlauf des während des Startvorgangs veränderten Mindestluftbedarfs Iₘᵢₙ gemäß einem Ausführungsbeispiel des vorgeschlagenen Verfahrens. Über die Zeit t sind in diesem Beispiel vier Phasen I, II, III, IV dargestellt. Phase I entspricht einer Stoppphase der Brennkraftmaschine 1, in der diese nicht läuft. Phase II entspricht einer Startphase der Brennkraftmaschine 1, während der das vorgeschlagene Verfahren zum Einsatz kommt. Phase III stellt eine Leerlaufphase bzw. eine Niedriglastphase der Brennkraftmaschine 1 dar, in der eine Leistungsanforderung an die Brennkraftmaschine 1 höchstens 30% einer Nennlast der Brennkraftmaschine 1 beträgt. Phase IV stellt eine Lastphase der Brennkraftmaschine 1 dar mit einer Leistungsanforderung an die Brennkraftmaschine 1 von mehr als 30% der Nennlast der Brennkraftmaschine 1. Wie dem Diagramm zu entnehmen ist, wird während der Startphase (Phase II) - die im gezeigten Beispiel etwa 30 Sekunden dauert - der Wert für den Mindestluftbedarf Iₘᵢₙ ausgehend von einem Startwert von z.B. 10 so lange verringert, bis die Brennkraftmaschine 1 startet und selbsttätig weiterläuft. Jener Wert für den Mindestluftbedarf Iₘᵢₙ, bei dem die Brennkraftmaschine 1 selbsttätig weiterläuft (in diesem Beispiel bei Iₘᵢₙ = 5), wird in weiterer Folge für den weiteren Betrieb der Brennkraftmaschine 1 in den Phasen III und IV im Wesentlichen konstant gehalten.

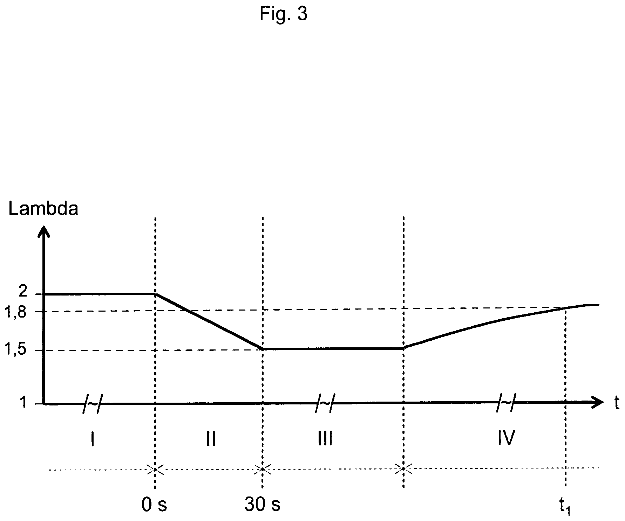

Fig. 3 zeigt für einen beispielhaften Startvorgang einer Brennkraftmaschine 1 den zeitlichen Verlauf des während des Startvorgangs veränderten Verbrennungsluftverhältnisses Lambda gemäß einem Ausführungsbeispiel des vorgeschlagenen Verfahrens. Die zeitlichen Phasen I, II, III, IV entsprechen den entsprechenden Phasen der Fig. 2. In diesem Beispiel wird während der Startphase (Phase II) der Wert für das Verbrennungsluftverhältnis Lambda ausgehend von einem Startwert von z.B. 2 so lange verringert, bis die Brennkraftmaschine 1 startet und selbsttätig weiterläuft. Jener Wert für das Verbrennungsluftverhältnis Lambda, bei dem die Brennkraftmaschine 1 selbsttätig weiterläuft (in diesem Beispiel bei Lambda = 1,5), wird in weiterer Folge für die Leerlaufphase bzw. Niedriglastphase (Phase III) der Brennkraftmaschine 1 im Wesentlichen konstant gehalten. In der Lastphase (Phase IV) erfolgt eine Anpassung des Verbrennungsluftverhältnisses Lambda entsprechend der von der Brennkraftmaschine 1 geforderten Leistung. Im gezeigten Beispiel wird das Verbrennungsluftverhältnis Lambda in der Lastphase (Phase IV) durch die Motorregelung erhöht und beträgt zu einem Zeitpunkt t₁ etwa 1,8.

## Patentansprüche

1. Verfahren zum Starten einer mit einem Brennstoff-Luft-Gemisch betriebenen Brennkraftmaschine (1), insbesondere eines stationären Gasmotors , wobei der Brennkraftmaschine (1) als Teil des Brennstoff-Luft-Gemischs ein Brennstoffvolumenstrom (QB) zugeführt wird, der unter Berücksichtigung wenigstens eines für den Energieinhalt des Brennstoff-Luft-Gemischs charakteristischen Parameters ermittelt wird, wobei die Brennkraftmaschine (1) durch eine Startvorrichtung (2) solange angetrieben wird bis die Brennkraftmaschine (1) selbsttätig weiterläuft, wobei der der Brennkraftmaschine (1) zugeführte Brennstoffvolumenstrom (QB) durch Veränderung des wenigstens einen für den Energieinhalt des Brennstoff-Luft-Gemischs charakteristischen Parameters solange verändert wird bis die Brennkraftmaschine (1) selbsttätig weiterläuft, **dadurch gekennzeichnet, dass** ein Mindestluftbedarf (Imin) in Bezug auf den Brennstoff als für den Energieinhalt des Brennstoff-Luft-Gemischs charakteristischer Parameter verändert wird.

2. Verfahren nach Anspruch 1, **dadurch gekennzeichnet, dass** ein Verbrennungsluftverhältnis (Lambda) des Brennstoff-Luft-Gemischs als für den Energieinhalt des Brennstoff-Luft-Gemischs charakteristischer Parameter verändert wird.

3. Verfahren nach einem der Ansprüche 1 bis 2, **dadurch gekennzeichnet, dass** der wenigstens eine für den Energieinhalt des Brennstoff-Luft-Gemischs charakteristische Parameter ausgehend von einem vorgebbaren Startwert verändert wird.

4. Verfahren nach einem der Ansprüche 1 bis 3, **dadurch gekennzeichnet, dass** der der Brennkraftmaschine (1) zugeführte Brennstoffvolumenstrom (QB) gemäß folgender Formel ermittelt wird: QB = QG / (1 + Lambda * Imin), wobei QB dem der Brennkraftmaschine (1) zugeführten Brennstoffvolumenstrom, QG einem vorgebbaren Gemischvolumenstrom des Brennstoff-Luft-Gemischs, Lambda einem Verbrennungsluftverhältnis des Brennstoff-Luft-Gemischs und Imin einem Mindestluftbedarf in Bezug auf den Brennstoff entsprechen.

5. Verfahren nach Anspruch 4, **dadurch gekennzeichnet, dass** Imin verändert wird.

6. Verfahren nach Anspruch 4 oder 5, **dadurch gekennzeichnet, dass** Imin verringert wird, vorzugsweise ausgehend von etwa 10 als Startwert.

7. Verfahren nach einem der Ansprüche 4 bis 6, **dadurch gekennzeichnet, dass** Lambda verändert wird.

8. Verfahren nach einem der Ansprüche 4 bis 7, **dadurch gekennzeichnet, dass** Lambda verringert wird, vorzugsweise ausgehend von etwa 2 als Startwert.

9. Verfahren nach einem der Ansprüche 1 bis 8, **dadurch gekennzeichnet, dass** jener Parameterwert des wenigstens einen für den Energieinhalt des Brennstoff-Luft-Gemischs charakteristischen Parameters, bei dem die Brennkraftmaschine (1) selbsttätig weiterläuft, für den weiteren Betrieb der Brennkraftmaschine (1) zumindest zeitweise im Wesentlichen konstant gehalten wird.

10. Verfahren nach Anspruch 9, **dadurch gekennzeichnet, dass** der Parameterwert bis zu einer Leistungsanforderung an die Brennkraftmaschine (1) von höchstens 30% einer Nennlast der Brennkraftmaschine im Wesentlichen konstant gehalten wird.

## Claims

1. A method of starting an internal combustion engine (1) operated with a fuel-air mixture, in particular a stationary gas engine, wherein fed to the internal combustion engine (1) as part of the fuel-air mixture is a fuel volume flow (QB) which is ascertained having regard to at least one parameter which is characteristic of the energy content of the fuel-air mixture, wherein the internal combustion engine (1) is driven by a starter device (2) until the internal combustion engine (1) continues to run of its own accord, **characterised in that** the fuel volume flow (QB) fed to the internal combustion engine (1) is varied by a variation in the at least one parameter which is characteristic of the energy content of the fuel-air mixture until the internal combustion engine (1) continues to run of its own accord, **characterised in that** a minimum air requirement (Imin) is varied in relation to the fuel as the parameter which is characteristic of the energy content of the fuel-air mixture.

2. A method as set forth in claim 1 **characterised in that** a combustion air ratio (lambda) of the fuel-air mixture is varied as the parameter which is characteristic of the energy content of the fuel-air mixture.

3. A method as set forth in one of claims 1 through 2 **characterised in that** the at least one parameter which is characteristic of the energy content of the fuel-air mixture is varied starting from a predeterminable starting value.

4. A method as set forth in one of claims 1 through 3 **characterised in that** the fuel volume flow (QB) fed to the internal combustion engine (1) is ascertained in accordance with the following formula:
QB = QG / (1 + lambda * Imin), wherein QB corresponds to the fuel volume flow fed to the internal combustion engine (1), QG corresponds to a predeterminable mixture volume flow of the fuel-air mixture, lambda corresponds to a combustion air ratio of the fuel-air mixture and Imin corresponds to a minimum air requirement in relation to the fuel.

5. A method as set forth in claim 4 **characterised in that** Imin is varied.

6. A method as set forth in claim 4 or claim 5 **characterised in that** Imin is reduced, preferably starting from about 10 as the starting value.

7. A method as set forth in one of claims 4 through 6 **characterised in that** lambda is varied.

8. A method as set forth in one of claims 4 through 7 **characterised in that** lambda is reduced, preferably starting from about 2 as the starting value.

9. A method as set forth in one of claims 1 through 8 **characterised in that** that parameter value of the at least one parameter which is characteristic of the energy content of the fuel-air mixture, at which the internal combustion engine (1) continues to run of its own accord, is kept substantially constant at least for a time for further operation of the internal combustion engine (1).

10. A method as set forth in claim 9 **characterised in that** the parameter value is kept substantially constant up to a power demand to the internal combustion engine (1) of at most 30% of a nominal load of the internal combustion engine.

## Revendications

1. Procédé de démarrage d'un moteur à combustion interne (1) fonctionnant avec un mélange carburant-air, en particulier d'un moteur à gaz fixe, dans lequel un débit volumique de carburant (QB), qui est déterminé en tenant compte d'au moins un paramètre caractéristique pour la teneur en énergie du mélange carburant-air, est amené en tant que partie du mélange carburant-air au moteur à combustion interne (1), dans lequel le moteur à combustion interne (1) est entraîné par un dispositif de démarrage (2) jusqu'à ce que le moteur à combustion interne (1) continue à fonctionner automatiquement, dans lequel le débit volumique de carburant (QB) amené au moteur à combustion interne (1) est modifié par modification de l'au moins un paramètre caractéristique pour la teneur en énergie du mélange carburant-air jusqu'à ce que le moteur à combustion interne (1) continue à fonctionner automatiquement, **caractérisé en ce qu'**un besoin en air minimum (Imin) est modifié par rapport au carburant en tant que paramètre caractéristique pour la teneur en énergie du mélange carburant-air.

2. Procédé selon la revendication 1, **caractérisé en ce qu'**un rapport d'air de combustion (lambda) du mélange carburant-air est modifié en tant que paramètre caractéristique pour la teneur en énergie du mélange carburant-air.

3. Procédé selon l'une quelconque des revendications 1 à 2, **caractérisé en ce que** l'au moins un paramètre caractéristique pour la teneur en énergie du mélange carburant-air est modifié en partant d'une valeur de départ prédéfinissable.

4. Procédé selon l'une quelconque des revendications 1 à 3, **caractérisé en ce que** le débit volumique de carburant (QB) amené au moteur à combustion interne (1) est déterminé selon la formule suivante :
QB = QG/(1 + lambda * Imin), dans lequel QB correspond au débit volumique de carburant amené au moteur à combustion interne (1), QG à un débit volumique de mélange prédéfinissable du mélange carburant-air, lambda à un rapport d'air de combustion du mélange carburant-air et Imin à un besoin d'air minimum par rapport au carburant.

5. Procédé selon la revendication 4, **caractérisé en ce que** Imin est modifié.

6. Procédé selon la revendication 4 ou 5, **caractérisé en ce que** Imin est réduit, de préférence en partant d'environ 10 en tant que valeur de départ.

7. Procédé selon l'une quelconque des revendications 4 à 6, **caractérisé en ce que** lambda est modifié.

8. Procédé selon l'une quelconque des revendications 4 à 7, **caractérisé en ce que** lambda est réduit, de préférence en partant d'environ 2 en tant que valeur de départ.

9. Procédé selon l'une quelconque des revendications 1 à 8, **caractérisé en ce que** la valeur de paramètre de l'au moins un paramètre caractéristique pour la teneur en énergie du mélange carburant-air, pour lequel le moteur à combustion interne (1) continue à fonctionner automatiquement, est maintenue au moins temporairement sensiblement constante pour la suite du fonctionnement du moteur à combustion interne (1).

10. Procédé selon la revendication 9, **caractérisé en ce que** la valeur de paramètre est maintenue sensiblement constante jusqu'à une exigence de puissance du moteur à combustion interne (1) de maximum 30 % d'une charge nominale du moteur à combustion interne.
